# FASCICULE DE BREVET EUROPEEN

(11) **EP 3 525 273 B1**
(45) Date de publication et mention de la délivrance du brevet: **13.05.2020**
(21) Numéro de dépôt: 19155811.3
(22) Date de dépôt: 06.02.2019
(51) Int. Cl.: H01M 6/50

(54) **ACCUMULATEUR ÉLECTRIQUE FACTICE POUR SIMULATION ET CARACTÉRISATION DE SOLUTIONS DE MANAGEMENTS THERMIQUES**
ELEKTRISCHER DUMMY-AKKUMULATOR FÜR DIE SIMULATION UND CHARAKTERISIERUNG VON WÄRMEMANAGEMENTLÖSUNGEN
DUMMY ELECTRIC BATTERY FOR SIMULATING AND CHARACTERISING THERMAL MANAGEMENT SOLUTIONS

(30) Priorité: 07.02.2018 FR 1851031
(43) Date de publication de la demande: 14.08.2019
(73) Titulaire: Commissariat à l'Energie Atomique et aux Energies Alternatives, 75015 Paris (FR)
(72) Inventeur: MARIOTTO, Mathieu, 38190 VILLARD-BONNOT (FR); CWICKLINSKI, Grégory, 38000 GRENOBLE (FR); DUCROS, Frédéric, 38120 FONTANIL (FR); PRA, Franck, 38450 LE GUA (FR)
(74) Mandataire: Cabinet Beaumont

(56) Documents cités:
- DE-A1-102013 001 088
- US-A1- 2013 313 754
- SHAH K ET AL: "An experimentally validated transient thermal model for cylindrical Li-ion cells", JOURNAL OF POWER SOURCES, ELSEVIER SA, CH, vol. 271, 27 juillet 2014 (2014-07-27), pages 262-268, XP029055205, ISSN: 0378-7753, DOI: 10.1016/J.JPOWSOUR.2014.07.118

## Description

### Domaine

La présente invention concerne un accumulateur électrique utilisé pour simuler le comportement thermique d'un ensemble d'accumulateurs électriques, également appelé module, l'assemblage de plusieurs modules formant une batterie d'accumulateurs électriques, également appelé pack batterie.

### Exposé de l'art antérieur

Le contrôle du comportement thermique d'un pack batterie présente plusieurs avantages :
- il permet notamment de faire fonctionner les accumulateurs, également appelés cellules par la suite, de façon optimale en termes de restitution d'énergie et de puissance électrique stockée ;
- il permet d'assurer une durée de vie la plus étendue possible des accumulateurs ;
- il permet en cas d'accidents de contenir les défauts et de préserver la plus grande partie du pack batterie ; et
- il permet de détecter la présence d'anomalies et d'anticiper des solutions pour continuer à assurer les trois fonctions précédentes.

De nombreux essais doivent être réalisés pour déterminer les algorithmes à mettre en oeuvre pour le contrôle du comportement thermique du pack batterie. Une possibilité pour réaliser les essais est d'utiliser de véritables accumulateurs. Toutefois, ceci présente plusieurs inconvénients. Un premier inconvénient est que les essais peuvent entraîner la destruction des accumulateurs et, éventuellement celle des instruments utilisés pour réaliser les essais, ce qui n'est pas souhaitable notamment si de nombreux essais sont réalisés. En outre, le coût des essais peut alors être important. Un deuxième inconvénient est qu'il peut être difficile, avec de véritables accumulateurs, de reproduire de manière identique les comportements des accumulateurs dus à des défauts ou lors d'incidents, notamment en raison de variabilité des réactions électrochimiques mises en jeu avec de véritables accumulateurs.

Il est connu d'utiliser des accumulateurs factices afin de reproduire, sans les inconvénients décrits précédemment, le comportement thermique des accumulateurs d'un pack batterie.

Un accumulateur factice a généralement les mêmes dimensions extérieures qu'un véritable accumulateur. De plus, on cherche à ce que le comportement thermique de l'accumulateur factice s'approche de celui d'un véritable accumulateur. En particulier, comme pour un véritable accumulateur, on cherche à ce que la conductivité thermique de l'accumulateur factice soit anisotrope. De plus, on cherche à ce que la masse volumique et la chaleur spécifique de l'accumulateur factice s'approchent de celles d'un véritable accumulateur.

La publication intitulée "An experimentally validated transient thermal model for cylindrical Li-ion cells" de K. Shah et al. (Journal of Power Sources 271 (2014) 262-268) décrit un accumulateur factice comprenant une bande chauffante fixée sur un support en Kapton® et enroulée sur elle-même. Des thermocouples sont insérés dans l'enroulement et l'ensemble est intégré dans une cartouche ayant les dimensions d'un véritable accumulateur.

Un inconvénient de l'accumulateur factice décrit dans la publication de K. Shah et al. est que, pour simuler le comportement d'un accumulateur ayant des configurations géométriques différentes, des propriétés thermiques différentes et/ou des propriétés massiques différentes, il est nécessaire de concevoir en totalité la structure d'un nouvel accumulateur factice. Le procédé de conception de l'accumulateur factice peut être un procédé long et difficile.

Il serait souhaitable de disposer d'un accumulateur factice, et d'un procédé de conception et de fabrication d'un tel accumulateur, dont la structure permette une adaptation rapide et simple pour la simulation des comportements d'accumulateurs ayant des configurations géométriques différentes, des propriétés thermiques différentes et/ou des propriétés massiques différentes.

### Résumé

Ainsi, un objet d'un mode de réalisation est de prévoir un accumulateur factice, et un procédé de conception et de fabrication d'un tel accumulateur, qui pallient au moins certains des inconvénients des accumulateurs factices décrits précédemment et des procédés de conception et de fabrication de tels accumulateurs.

Selon un autre objet d'un mode de réalisation, la structure de l'accumulateur factice permet une adaptation rapide et simple pour la simulation du comportement d'accumulateurs ayant des configurations géométriques différentes, des propriétés thermiques différentes et/ou des propriétés massiques différentes.

Selon un autre objet d'un mode de réalisation, le procédé de conception de l'accumulateur factice est simple.

Ainsi, un mode de réalisation prévoit un accumulateur électrique factice comprenant, dans une enveloppe :
- une alternance de plaques conductrices thermiquement et de plaques isolantes thermiquement ;
- au moins, pour l'une des plaques isolantes thermiquement interposées entre deux plaques conductrices thermiquement, un pont thermique conducteur thermiquement présent dans ladite plaque isolante thermiquement et connecté mécaniquement auxdites deux plaques conductrices thermiquement ; et
- au moins un élément résistif et des conducteurs connectés à l'élément résistif et s'étendant à l'extérieur de l'enveloppe.

Selon un mode de réalisation, les plaques conductrices thermiquement ont des dimensions différentes.

Selon un mode de réalisation, au moins l'une des plaques conductrices thermiquement est au moins en partie entourée par un bord isolant thermiquement interposé entre deux plaques isolantes thermiquement.

Selon un mode de réalisation, l'accumulateur électrique factice comprend au moins deux ponts thermiques conducteurs thermiquement connectés à des plaques conductrices thermiquement différentes.

Selon un mode de réalisation, les plaques conductrices thermiquement et les plaques isolantes thermiquement sont planes.

Selon un mode de réalisation, les plaques conductrices thermiquement et les plaques isolantes thermiquement sont cylindriques.

Selon un mode de réalisation, les plaques conductrices thermiquement sont métalliques.

Selon un mode de réalisation, les plaques isolantes thermiquement sont en polymère.

Un mode de réalisation prévoit également un procédé de fabrication d'un accumulateur électrique factice tel que défini précédemment.

Selon un mode de réalisation, le procédé comprend les étapes suivantes :
a) déterminer des dimensions pour les plaques conductrices thermiquement ;
b) déterminer les conductivités thermiques équivalentes de l'accumulateur électrique factice selon des directions privilégiées ; et
c) répéter les étapes a) et b) jusqu'à ce que les conductivités thermiques équivalentes soient égales à des valeurs cibles à une marge d'erreur près.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1 et 2 sont des vues en perspective avec coupe, partielles et schématiques, d'un mode de réalisation d'un accumulateur factice ;
les figures 3 et 4 sont des vues en perspective avec coupe, partielles et schématiques, d'un autre mode de réalisation d'un accumulateur factice ;
les figures 5 et 6 sont des vues en coupe dans des plans perpendiculaires d'un autre mode de réalisation d'un accumulateur factice ;
la figure 7 est une vue en perspective d'un autre mode de réalisation d'un accumulateur factice ;
les figures 8 à 11 sont des vues en perspective avec coupe, partielles et schématiques, d'autres modes de réalisation d'un accumulateur factice ;
les figures 12 à 14 sont des vues en coupe de dessus, partielles et schématiques, de l'accumulateur factice représenté sur les figures 1 et 2 pour différents agencements d'éléments résistifs ;
les figures 15 à 16 sont respectivement une vue en perspective et une vue en coupe de dessus de l'accumulateur factice représenté sur les figures 3 et 4 pour différents agencements d'éléments résistifs ; et
la figure 17 est un schéma-bloc d'un mode de réalisation d'un procédé de conception d'un accumulateur électrique factice.

### Description détaillée

De mêmes éléments ont été désignés par de mêmes références dans les différentes figures. Pour des raisons de clarté, seuls les éléments qui sont nécessaires à la compréhension des modes de réalisation décrits ont été représentés dans les différentes figures et sont détaillés. Dans la suite de la description, les qualificatifs "inférieur", "supérieur", "vers le haut" et "vers le bas" sont utilisés en relation avec l'orientation des figures. En outre, les expressions "sensiblement", "environ", "approximativement" et "de l'ordre de" signifient "à 10 % près", de préférence à 5 % près. De plus, un matériau conducteur électriquement est un matériau dont la conductivité électrique est supérieure ou égale à 1000 S/m et un matériau isolant électriquement est un matériau dont la résistivité électrique est supérieure ou égale à 10⁵ Ω/m. De plus, un matériau conducteur thermiquement est un matériau dont la conductivité thermique est supérieure ou égale à 50 W/(m.K) et un matériau isolant thermiquement est un matériau dont la conductivité thermique est inférieure ou égale à 1 W/(m.K).

Selon un mode de réalisation, un accumulateur électrique factice comprend un empilement de plaques conductrices électriquement et de plaques isolantes électriquement. De ce fait, la structure interne de l'accumulateur factice s'approche de celle d'un véritable accumulateur électrique qui comprend généralement une succession d'éléments conducteurs électriquement (cathode ou anode), qui sont également conducteurs thermiquement et d'électrolytes conducteurs ioniques, qui sont également isolants thermiquement. Ceci permet de façon avantageuse de mieux reproduire le comportement de cet assemblage d'un point de vue thermique.

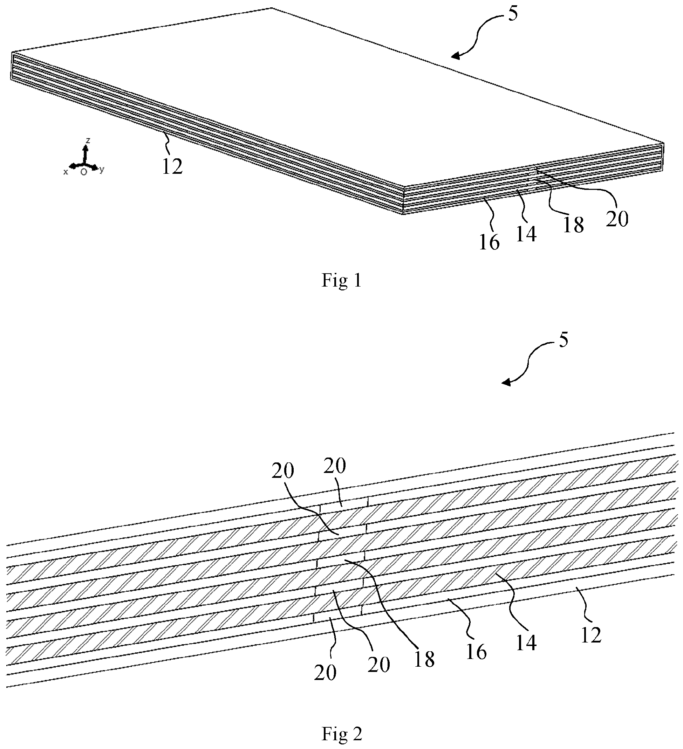

Les figures 1 et 2 sont des vues en perspective avec coupe, partielles et schématiques, d'un mode de réalisation d'un accumulateur électrique factice 5 adapté au cas où l'accumulateur électrique à simuler présente une symétrie planaire, notamment dans le cas d'un accumulateur électrique prismatique. La figure 2 est une vue agrandie de la figure 1. On note Oxyz un repère orthogonal.

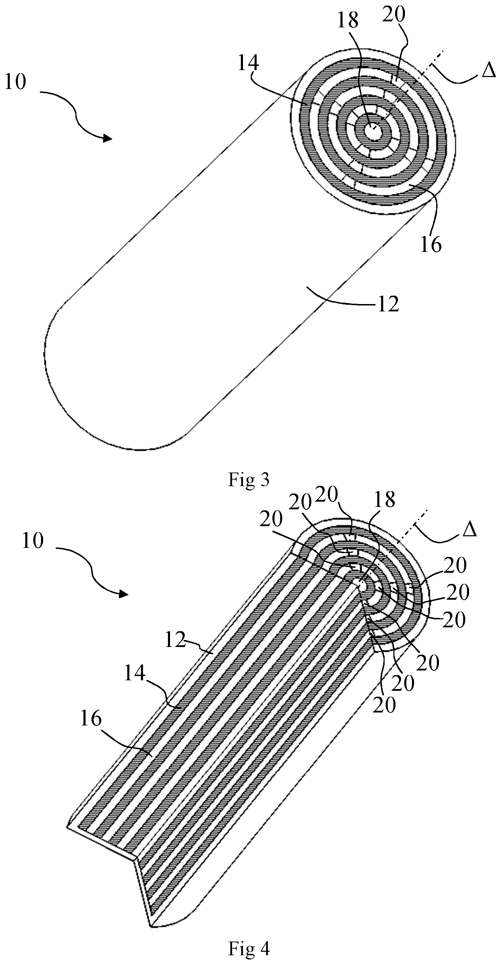

Les figures 3 et 4 sont des vues en perspective avec coupe, partielles et schématiques, d'un mode de réalisation d'un accumulateur électrique factice 10 adapté au cas où l'accumulateur électrique à simuler présente une symétrie de rotation autour d'un axe Δ.

Chaque accumulateur 5 ou 10 comprend une enveloppe 12. Chaque accumulateur 5 ou 10 comprend en outre, dans l'enveloppe 12, une succession de plaques comprenant une alternance de plaques 14 conductrices électriquement et thermiquement et de plaques 16 isolantes électriquement et thermiquement. Dans le cas de l'accumulateur 5, les plaques 14 et 16 sont sensiblement planes. Dans le cas de l'accumulateur 10, les plaques 14 et 16 sont sensiblement cylindriques.

Chaque accumulateur 5 ou 10 comprend en outre, contenu dans la succession de plaques 14, 16, conductrices et isolantes, au moins un élément résistif 18 commandable. Dans le cas de l'accumulateur 5, l'élément résistif 18 commandable peut être situé dans une plaque conductrice 14 ou dans une plaque isolante 16. Dans le cas de l'accumulateur 10, l'élément résistif 18 commandable peut être situé le long de l'axe Δ. Chaque accumulateur 5 ou 10 comprend en outre au moins un pont thermique 20 en un matériau conducteur thermiquement. Chaque pont thermique 20 est situé dans l'une des plaques isolantes 16 et est en contact mécanique avec les deux plaques conductrices 14 entre lesquelles est située la plaque isolante 16.

Chaque élément résistif 18 commandable est un composant électrique émettant par effet Joules une puissance thermique de niveau commandable. Selon un mode de réalisation, l'élément résistif 18 est alimenté en électricité par des fils conducteurs non représentés. L'élément résistif 18 est isolé électriquement des plaques conductrices 14 avec lesquelles il peut être en contact mécanique. A titre d'exemple, chaque élément résistif 18 peut être encapsulé dans une plaque isolante électriquement, par exemple une céramique ou certains matériaux polymères, notamment le polyimide commercialisé sous l'appellation Kapton®.

L'enveloppe 12 peut être en matériau polymère ou métallique. L'épaisseur de l'enveloppe 12 peut être comprise entre 0,1 mm et 3 mm.

Dans le mode de réalisation d'accumulateur prismatique représenté sur les figures 1 et 2, les plaques conductrices 14 ont toutes la même longueur mesurée selon la direction Oy, la même largeur mesurée selon la direction Ox et la même épaisseur mesurée selon la direction Oz. Selon un autre mode de réalisation, les plaques conductrices 14 peuvent avoir des longueurs, des largeurs et/ou des épaisseurs différentes.

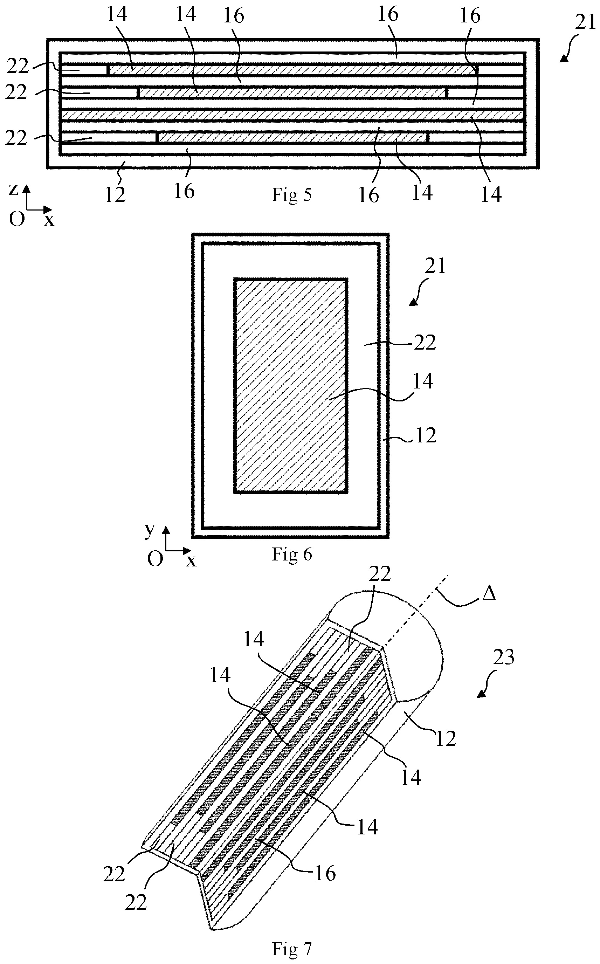

Les figures 5 et 6 sont des vues en coupe d'un mode de réalisation d'un accumulateur factice 21, les éléments résistifs 18 et les ponts thermiques 20 n'étant pas représentés sur ces figures. L'accumulateur 21 comprend tous les éléments de l'accumulateur 5 représenté sur les figures 1 et 2 à la différence que les plaques conductrices 14 n'ont pas toutes les mêmes dimensions. La figure 5 est une vue en coupe selon un plan parallèle au plan Oxz. Comme cela apparaît sur cette figure, les plaques conductrices 14 peuvent avoir des largeurs mesurées selon la direction Ox qui sont différentes. Selon un mode de réalisation, toutes les plaques isolantes 16 ont les mêmes dimensions. La figure 6 est une vue en coupe selon un plan parallèle au plan Oxy. On a représenté sur cette figure l'une des plaques conductrices 14 dont la largeur mesurée selon la direction Ox et la longueur mesurée selon la direction Oy sont inférieures à celles des plaques isolantes 16.

Les plaques conductrices 14 dont la largeur et/ou la longueur sont inférieures à celles des plaques isolantes 16 sont entourées par des bords isolants 22 du même matériau que les plaques isolantes 16. De préférences, les plaques conductrices 14, dont la largeur et/ou la longueur sont inférieures à celles des plaques isolantes 16, sont centrées par rapport à l'axe de symétrie de l'accumulateur parallèle à la direction Oz.

Dans le mode de réalisation d'accumulateur cylindrique représenté sur les figures 3 et 4, les plaques conductrices 14 ont toutes la même longueur mesurée selon l'axe Δ, et la même épaisseur mesurée radialement par rapport à l'axe Δ. Selon un autre mode de réalisation, les plaques conductrices 14 peuvent avoir des longueurs et/ou des épaisseurs différentes.

La figure 7 est une vue en perspective avec coupe d'un autre mode de réalisation d'un accumulateur factice 23, les éléments résistifs 18 et les ponts thermiques 20 n'étant pas représentés sur cette figure. L'accumulateur 23 comprend tous les éléments de l'accumulateur 10 représenté sur les figures 3 et 4 à la différence que les plaques conductrices 14 n'ont pas toutes les mêmes longueurs mesurées selon l'axe Δ. Les plaques conductrices 14 dont la longueur est inférieure à celle des plaques isolantes 16 sont entourées par des plaques isolantes 22 du même matériau que les plaques isolantes 16. De préférence, les plaques conductrices 14, dont la longueur mesurée selon l'axe Δ est inférieure à celle des plaques isolantes 16, sont centrées entre les extrémités de l'accumulateur 23 selon l'axe Δ.

Selon un mode de réalisation, chaque plaque isolante 16 est en un matériau dont la masse volumique est comprise entre 80 kg/m³ et 2500 kg/m³, de préférence entre 950 kg/m³ et 2500 kg/m³, plus préférentiellement entre 1000 kg/m³ et 1500 kg/m³, par exemple 1050 kg/m³. Selon un mode de réalisation, chaque plaque isolante 16 est en un matériau dont la chaleur spécifique, également appelée capacité thermique massique, à 20°C est comprise entre 1000 Jkg⁻¹K⁻¹ et 1500 Jkg⁻¹K⁻¹, de préférence entre 1150 Jkg⁻¹K⁻¹ et 1350 Jkg⁻¹K⁻¹. Selon un mode de réalisation, chaque plaque isolante 16 est en un matériau dont la conductivité thermique est comprise entre 0,02 Wm⁻¹K⁻¹ et 5 Wm⁻¹K⁻¹, de préférence entre 0,15 Wm⁻¹K⁻¹ et 0,25 Wm⁻¹K⁻¹, par exemple 0,2 Wm⁻¹K⁻¹. Selon un mode de réalisation, chaque plaque isolante 16 est en un polymère tenant en température à plus de 90°C, notamment un polymère compris dans le groupe comprenant l'acrylonitrile butadiène styrène (ABS), les polyaryléthers (PPE), le polytétrafluoroéthylène (PTFE), le polytéréphtalate d'éthylène (PET) et le polytéréphtalate de butylène (PBT). L'épaisseur de chaque plaque isolante 16 peut être comprise entre 0,1 mm et 3 mm. Les plaques isolantes 16 peuvent avoir des épaisseurs différentes.

Selon un mode de réalisation, chaque plaque conductrice 14 est en un matériau dont la masse volumique est comprise entre 2000 kg/m³ et 10000 kg/m³. Selon un mode de réalisation, chaque plaque conductrice 14 est en un matériau dont la chaleur spécifique, également appelée capacité thermique massique, à 20°C est comprise entre 200 Jkg⁻¹K⁻¹ et 600 Jkg⁻¹K⁻¹, de préférence entre 300 Jkg⁻¹K⁻¹ et 900 Jkg⁻¹K⁻¹. Selon un mode de réalisation, chaque plaque conductrice 14 est en un matériau dont la conductivité thermique est comprise entre 20 Wm⁻¹K⁻¹ et 500 Wm⁻¹K⁻¹. Selon un mode de réalisation, chaque plaque conductrice 14 est en un matériau compris dans le groupe comprenant le cuivre, l'aluminium, le laiton ou l'acier. L'épaisseur de chaque plaque conductrice 14 peut être comprise entre 0,1 mm et 5 mm. Les plaques conductrices 14 peuvent avoir des épaisseurs différentes.

Les dimensions de chaque plaque conductrice 14 et de chaque plaque isolante 16 sont adaptées aux dimensions de l'accumulateur électrique à simuler. Dans le cas de l'accumulateur prismatique 5 ou 21, la largeur et la longueur de chaque plaque plane conductrice 14 mesurées dans le plan (Oxy) sont comprises entre 10 mm et 500 mm et la largeur et la longueur de chaque plaque plane isolante 16 mesurées dans le plan (Oxy) sont comprises entre 10 mm et 500 mm. Dans le cas de l'accumulateur cylindrique 10 ou 23, la longueur selon l'axe Δ de chaque plaque cylindrique conductrice 14 est comprise entre 10 mm et 500 mm et la longueur selon l'axe Δ de chaque plaque cylindrique isolante 16 est comprise entre 10 mm et 500 mm.

Selon un mode de réalisation, chaque pont thermique 20 a les propriétés indiquées précédemment pour les plaques conductrices 14. Selon un mode de réalisation, chaque pont thermique 20 est dans l'un des matériaux indiqués précédemment pour les plaques conductrices 14. Dans le cas de l'accumulateur prismatique 5 ou 21, la largeur et la longueur de chaque pont thermique 20 mesurées dans le plan (Oxy) sont comprises entre 1 mm et 10 mm. Dans le cas de l'accumulateur cylindrique 10 ou 23, la longueur selon l'axe Δ de chaque pont thermique 20 est comprise entre 1 mm et 10 mm.

Les dimensions et le nombre d'éléments résistifs 18 dépendent de l'accumulateur électrique à simuler. De préférence, chaque élément résistif 18 est contenu dans un parallélépipède rectangle dont la longueur est comprise entre 5 mm et 500 mm, la largeur est comprise entre 1 mm et 100 mm et la hauteur est comprise entre 0,25 mm et 10 mm.

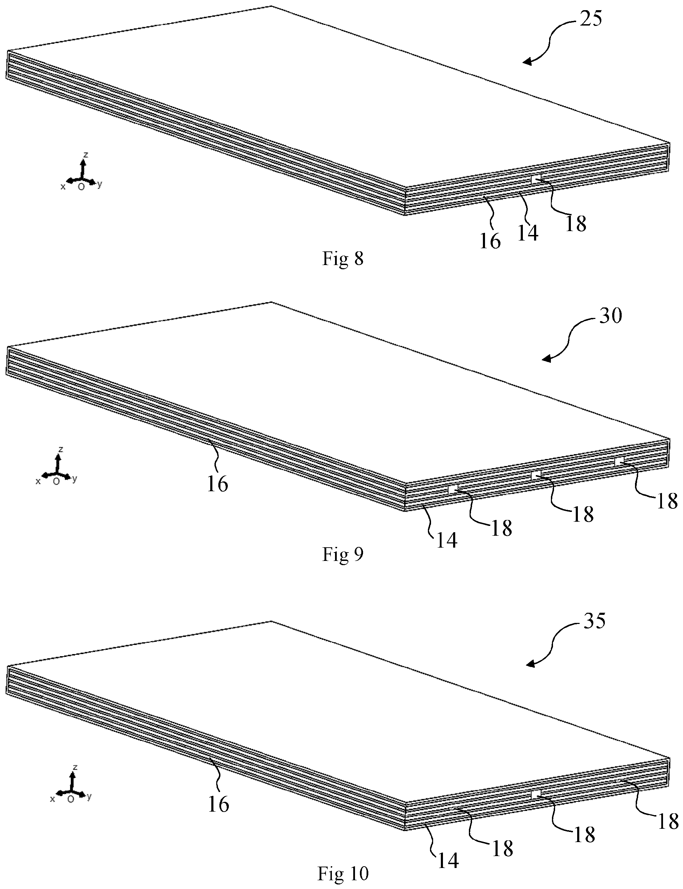

Les figures 8 à 11 illustrent différents agencements d'éléments résistifs 18 pour des accumulateurs factices prismatiques.

La figure 8 est une vue en perspective d'un mode de réalisation d'un accumulateur factice 25 dans lequel l'élément résistif 18 s'étend, selon la direction Oz, sur plusieurs plaques 14, 16.

La figure 9 est une vue en perspective d'un mode de réalisation d'un accumulateur factice 30 comprenant trois éléments résistifs 18 s'étendant chacun, selon la direction Oz, sur plusieurs plaques 14, 16.

La figure 10 est une vue en perspective d'un mode de réalisation d'un accumulateur factice 35 comprenant trois éléments résistifs 18 dont l'un s'étend, selon la direction Oz, sur plusieurs plaques 14, 16.

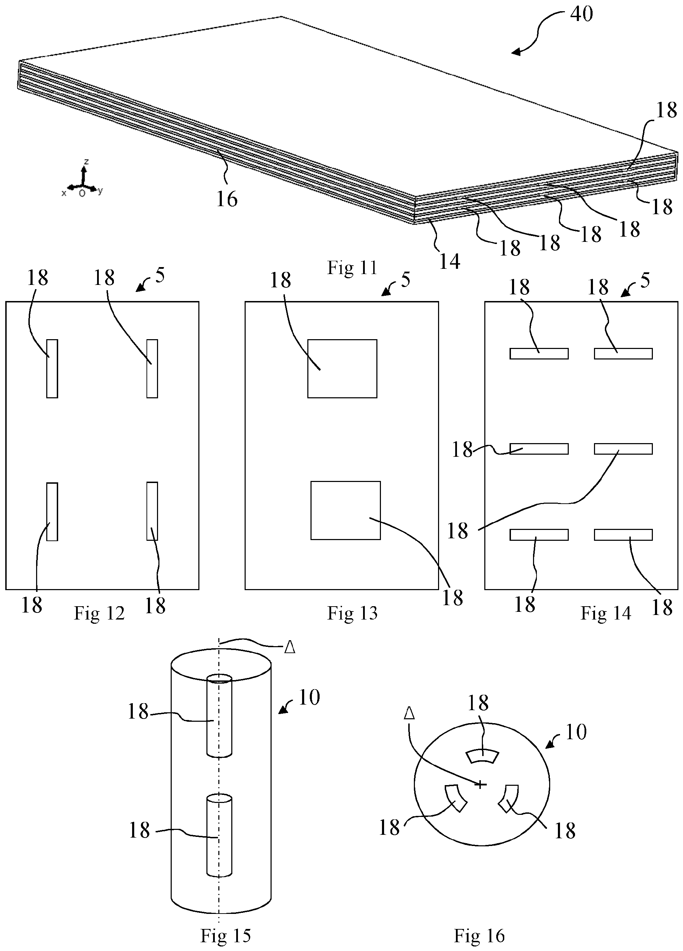

La figure 11 est une vue en perspective d'un mode de réalisation d'un accumulateur factice 40 comprenant six éléments résistifs 18 deux à deux alignés selon la direction Oz.

Les figures 12 à 14 sont des vues en coupe de dessus, partielles et schématiques, de l'accumulateur factice 5 représenté sur les figures 1 et 2 pour différents agencements d'éléments résistifs 18, les ponts thermiques 20 n'étant pas représentés sur ces figures. Comme cela apparaît sur ces figures, les éléments résistifs 18 peuvent ne pas s'étendre sur toute la longueur ni sur toute la largeur de l'accumulateur 5.

Les figures 15 et 16 sont respectivement une vue en perspective et une vue en coupe de dessus de l'accumulateur factice 10 représenté sur les figures 3 et 4 pour différents agencements d'éléments résistifs 18, les ponts thermiques 20 n'étant pas représentés sur ces figures. Comme cela apparaît sur la figure 15 qui est une vue en perspective schématique avec transparence, les éléments résistifs 18 peuvent ne pas s'étendre sur toute la longueur de l'accumulateur 10 selon l'axe Δ. Comme cela apparaît sur la figure 16, les éléments résistifs 18 peuvent être répartis dans l'accumulateur 10 autour de l'axe Δ.

Les dimensions et le nombre de ponts thermiques 20 dépendent de l'accumulateur électrique à simuler. Les agencements illustrés sur les figures 12 à 16 pour des éléments résistifs 18 peuvent également correspondre à des agencements possibles pour les ponts thermiques 20.

Selon un mode de réalisation d'un procédé de fabrication des accumulateurs 5, 10, 21, 23, 25, 30, 35, 40 décrits précédemment, les plaques conductrices 14, les plaques isolantes 16, les bords isolants 22, les éléments résistifs 18 et les ponts thermiques 20 sont montés par collage. Selon un mode de réalisation, les plaques isolantes 16 correspondent à des films isolants qui sont enduits d'une couche adhésive, par exemple sur les deux faces. Les plaques isolantes 16 sont alors collées sur les plaques conductrices 14. Des ouvertures peuvent être formées dans les plaques isolantes 16 pour recevoir les ponts thermiques 20. Des ouvertures peuvent être formées dans les plaques isolantes 16 et/ou les plaques conductrices 14 pour recevoir les éléments résistifs 18. A titre de variante, les pièces métalliques (plaques conductrices 14 et ponts thermiques 20) peuvent être brasées ou soudées entre elles.

Selon un autre mode de réalisation d'un procédé de fabrication des accumulateurs 5, 10, 21 ou 23 décrits précédemment, notamment dans le cas où les plaques isolantes 16 sont en polymère, les plaques conductrices 14, les plaques isolantes 16, les bords isolants 22, les éléments résistifs 18 et les ponts thermiques 20 sont assemblés au préalable sans collage ni soudure et l'ensemble obtenu est comprimé et chauffé jusqu'à la température de fusion partielle du polymère composant les plaques isolantes 16 afin d'obtenir un thermocollage des plaques isolantes 16 avec les autres éléments de l'accumulateur. Un tel mode de réalisation permet de façon avantageuse de minimiser les résistances thermiques d'interface.

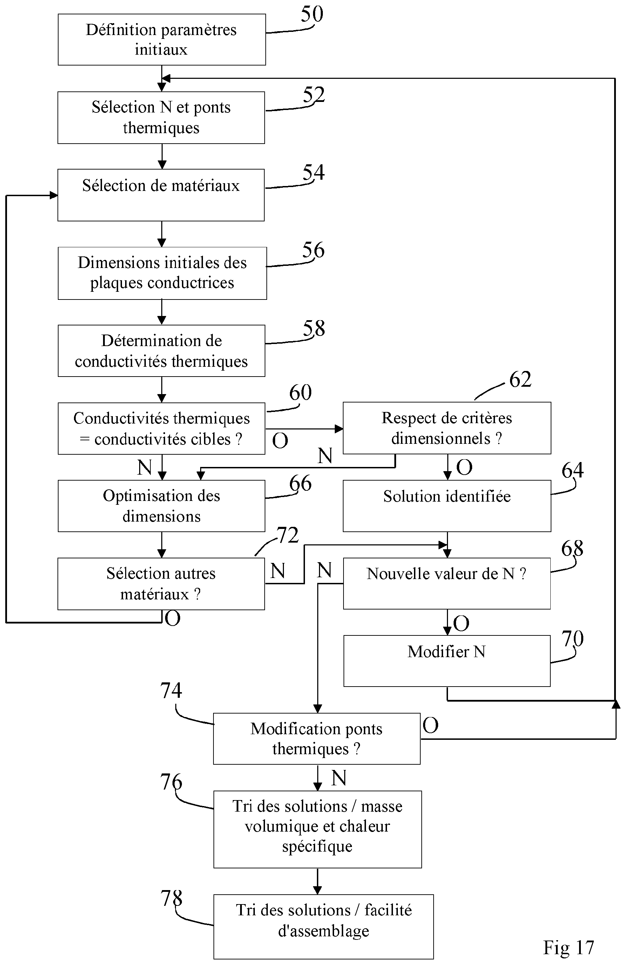

La figure 17 est un schéma-bloc d'un mode de réalisation d'un procédé de conception d'un accumulateur électrique factice ayant la structure des accumulateurs prismatiques 5 ou 21 ou des accumulateurs cylindriques 10 ou 23 décrits précédemment. Le procédé de conception est mis en oeuvre par un ordinateur. L'ordinateur comprend une mémoire dans laquelle est stockée une base de données contenant la liste des matériaux disponibles pour les plaques conductrices 14, les plaques isolantes 16, les bords isolants 22 et les ponts thermiques 20 et les propriétés physiques de chacun de ces matériaux.

A l'étape 50, l'utilisateur détermine les propriétés physiques souhaitées, ou valeurs cibles, de l'accumulateur factice. Les propriétés physiques souhaitées de l'accumulateur factice peuvent notamment comprendre :
les conductivités thermiques équivalentes selon des directions privilégiées, par exemple les directions Ox, Oy et Oz pour un accumulateur prismatique et selon l'axe Δ et radialement par rapport à l'axe Δ pour un accumulateur cylindrique ;
la chaleur spécifique massique moyenne ;
la masse volumique moyenne ;
les dimensions extérieures de l'accumulateur en l'absence de l'enveloppe 12, par exemple la largeur W selon la direction Ox, la longueur L selon la direction Oy et l'épaisseur T selon la direction Oz pour un accumulateur prismatique et la hauteur H selon l'axe Δ et le rayon externe R pour un accumulateur cylindrique ; et
le matériau et l'épaisseur de l'enveloppe 12.

Le procédé se poursuit à l'étape 52.

A l'étape 52, un nombre entier N de plaques conductrices 14 de l'accumulateur factice est déterminé. Ceci fixe le nombre de plaques isolantes 16 qui dépend de la structure souhaitée de l'accumulateur. A titre d'exemple, pour un accumulateur prismatique, on peut privilégier une structure symétrique selon la direction Oz dans laquelle l'enveloppe 12 est en contact avec des plaques isolantes 16 selon la direction Oz. Dans ce cas, le nombre de plaques isolantes 16 est égal à N+1. A la première itération de l'étape 52, le nombre N est choisi égal à un nombre par défaut inférieur à un nombre entier Nmax. A l'étape 52, les dimensions de chaque pont thermique 20 sont également déterminées. Selon un mode de réalisation, tous les ponts thermiques 20 peuvent avoir les mêmes dimensions. A titre d'exemple, pour un accumulateur prismatique, il est déterminé une dimension du pont thermique 20 selon la direction Ox et une dimension du pont thermique 20 selon la direction Oy et, pour un accumulateur cylindrique, il est déterminé une dimension du pont thermique 20 selon l'axe Δ et le secteur angulaire occupé par le pont thermique 20. Un agencement prédéfini des ponts thermiques 20 peut également être déterminé. Le procédé se poursuit à l'étape 54.

A l'étape 54, il est sélectionné dans la base de données un matériau conducteur thermiquement pour toutes les plaques conductrices 14 et les ponts thermiques 20 et un matériau isolant thermiquement pour toutes les plaques isolantes 16 et tous les bords isolants 22. Il est en outre déterminé une épaisseur minimale et une épaisseur maximale pour les plaques conductrices 14, les plaques isolantes 16 et les bords isolants 22. Les épaisseurs minimales et maximales peuvent dépendre des matériaux composant les plaques conductrices 14, les plaques isolantes 16 et les bords isolants 22 ou être indépendantes des matériaux composant les plaques conductrices 14, les plaques isolantes 16 et les bords isolants 22. A titre d'exemple, l'épaisseur minimale d'une plaque conductrice 14, d'une plaque isolante 16 ou d'un bord isolant 22 est égale à 100 µm et l'épaisseur maximale d'une plaque conductrice 14, d'une plaque isolante 16 ou d'un bord isolant 22 est égale à T/2 pour un accumulateur prismatique et R/2 pour un accumulateur cylindrique. Le procédé se poursuit à l'étape 56.

A l'étape 56, des dimensions initiales sont déterminées pour les plaques conductrices 14. A titre d'exemple, pour un accumulateur prismatique, on appelle A la largeur de la plaque conductrice 14 mesurée selon la direction Ox, B la longueur de la plaque conductrice 14 mesurée selon la direction Oy et C l'épaisseur de la plaque conductrice 14 mesurée selon la direction Oz. A titre d'exemple, comme dimensions initiales, A est choisi égal à W/2, B est choisi égal à L/2 et C est choisi égal à T/(2^{∗}N), les dimensions initiales étant identiques pour toutes les plaques conductrices 14. A titre d'exemple, pour un accumulateur cylindrique, on appelle A la dimension de la plaque conductrice 14 mesurée selon l'axe Δ et B la dimension de la plaque conductrice 14 mesurée perpendiculairement à l'axe Δ. A titre d'exemple, comme dimensions initiales, A est choisi égal à H/2 et B est choisi égal à R/(2^{∗}N). Les dimensions des plaques isolantes 16 sont alors déterminées. Les zones non occupées par les plaques conductrices 14 sont considérées comme occupées par les bords isolants 22 du même matériau que les plaques isolantes 16. Le procédé se poursuit à l'étape 58.

A l'étape 58, les conductivités thermiques équivalentes de l'accumulateur sont déterminées selon les directions privilégiées. A titre d'exemple, pour un accumulateur prismatique, les conductivités thermiques équivalentes selon les directions Ox, Oy et Oz sont déterminées et, pour un accumulateur cylindrique, les conductivités thermiques équivalentes selon l'axe Δ et perpendiculairement à l'axe Δ sont déterminées.

Selon un mode de réalisation, on détermine pour chaque élément de l'accumulateur (plaques conductrices 14, plaques isolantes 16, bords isolants 22 et ponts thermiques 20) la résistance thermique de l'élément dans les directions privilégiées. Selon un mode de réalisation, pour une plaque plane ayant une épaisseur e dans une direction privilégiée, on considère que la résistance thermique surfacique de la plaque selon la direction privilégiée est égale à e/λ où λ est la conductivité thermique du matériau composant la plaque. A titre d'exemple, pour une plaque cylindrique d'axe Δ dont le rayon interne est r1 et le rayon externe est r2 et la longueur mesurée selon l'axe Δ est L, la résistance thermique de la plaque radialement à l'axe Δ est égale à (ln(r1/r2))/(2^{∗}π^{∗}L^{∗}λ). L'accumulateur factice étant composé de plusieurs domaines de matériaux différents, la résistance thermique équivalente selon une direction privilégiée peut être déterminée à partir des résistances thermiques selon la direction privilégiée de chaque domaine. Dans le cas de domaines en série selon la direction privilégiée, la résistance thermique équivalente selon la direction privilégiée des domaines est égale à la somme des résistances thermiques selon la direction privilégiée des domaines. Dans le cas de domaines en parallèle selon la direction privilégiée, l'inverse de la résistance thermique équivalente selon la direction privilégiée des domaines est égal à la somme des inverses des résistances thermiques selon la direction privilégiée de chaque élément du domaine.

Selon un mode de réalisation, pour déterminer la résistance thermique équivalente selon une direction privilégiée de l'accumulateur factice, on segmente l'accumulateur en zones successives selon la direction privilégiée, de façon que, dans chaque zone, la structure de l'accumulateur ne varie pas selon la direction privilégiée. Pour chaque zone, les domaines de la zone sont en parallèle et l'inverse de la résistance thermique équivalente de la zone selon la direction privilégiée est égal à la somme des inverses des résistances thermiques selon la direction privilégiée des domaines de la zone. La résistance thermique équivalente selon la direction privilégiée de l'accumulateur est alors égale à la somme des résistances thermiques équivalentes selon la direction privilégiée des zones successives. La conductivité thermique de l'accumulateur selon la direction privilégiée est égale à l'inverse du produit de la résistance thermique de l'accumulateur et de la dimension totale de l'accumulateur sur la direction privilégiée. Le procédé se poursuit à l'étape 60.

A l'étape 60, les conductivités thermiques de l'accumulateur selon les directions privilégiées sont comparées aux valeurs cibles. Si les conductivités thermiques équivalentes de l'accumulateur selon les directions privilégiées sont égales aux valeurs cibles à une marge d'erreur près, le procédé se poursuit à l'étape 62. Si les conductivités thermiques équivalentes de l'accumulateur selon les directions privilégiées ne sont pas égales aux valeurs cibles à la marge d'erreur près, le procédé se poursuit à l'étape 66.

A l'étape 62, d'autres critères peuvent être vérifiés pour déterminer si la solution issue de l'étape 60 est satisfaisante. Selon un mode de réalisation, à l'étape 60, on détermine si les épaisseurs des plaques conductrices 14 ou isolantes 16 sont supérieures aux épaisseurs minimales et inférieures aux épaisseurs maximales. Si cela est le cas, le procédé se poursuit à l'étape 64. Si cela n'est pas le cas, le procédé se poursuit à l'étape 66.

A l'étape 64, les valeurs N, A, B et éventuellement C déterminées à l'étape 60 sont mémorisées comme correspondant à une solution possible d'accumulateur factice. Le procédé se poursuit à l'étape 68.

A l'étape 68, le procédé détermine si une nouvelle valeur de N peut être utilisée. Si tel est le cas, le procédé se poursuit à l'étape 70. Si tel n'est pas le cas, le procédé se poursuit à l'étape 74.

A l'étape 70, une nouvelle valeur de N est déterminée. Le procédé se poursuit à l'étape 52 à laquelle une nouvelle solution est recherchée avec la nouvelle valeur de N.

A l'étape 66, un procédé d'optimisation est mis en oeuvre pour faire varier les dimensions des plaques conductrices 14 afin de trouver une structure d'accumulateur factice pour laquelle les conductivités thermiques équivalentes de l'accumulateur selon les directions privilégiées sont égales aux valeurs cibles à une marge d'erreur près. A titre d'exemple, le procédé d'optimisation correspond à la méthode d'optimisation GRG (sigle anglais pour Generalized Reduced Gradient), notamment décrite dans l'article de J. Abadie et G. Guerrero intitulé "Méthode du GRG, méthode de Newton globale et application à la programmation mathématique" (RAIRO, Recherche opérationnelle, vol. 18, n°4, novembre 1984, p319-351). Il peut s'agir d'une méthode d'optimisation multiparamétrique. A titre d'exemple, pour un accumulateur prismatique, le procédé d'optimisation peut faire varier les dimensions A, B et C de chaque plaque conductrice 14. Pour chaque nouvelle valeur de dimensions des plaques conductrices 14, les conductivités thermiques équivalentes selon les directions privilégiées sont déterminées comme cela a été décrit précédemment à l'étape 58 et les conductivités thermiques équivalentes selon les directions privilégiées sont comparées aux valeurs cibles comme cela a été décrit précédemment à l'étape 60. Pour la détermination des conductivités thermiques équivalentes selon les directions privilégiées, une structure la plus symétrique possible de l'accumulateur factice peut être privilégiée. Si le procédé d'optimisation permet la détermination d'une solution pour laquelle les conductivités thermiques équivalentes de l'accumulateur selon les directions privilégiées sont égales aux valeurs cibles à une marge d'erreur près, le procédé se poursuit à l'étape 62. Si le procédé d'optimisation ne parvient pas à déterminer de solution, le procédé se poursuit à l'étape 72. Il est par exemple déterminé qu'une solution ne peut pas être trouvée lorsque le procédé d'optimisation a effectué un nombre d'itérations supérieur à un seuil sans parvenir à obtenir une solution.

A l'étape 72, il est déterminé si d'autres matériaux peuvent être sélectionnés pour les plaques conductrices 14 et/ou les plaques isolantes 16. Si cela est le cas, le procédé se poursuit à l'étape 54 ou le procédé se poursuit avec les nouveaux matériaux déterminés et la dernière valeur utilisée pour N. Si cela n'est pas le cas, le procédé se poursuit à l'étape 68.

A l'étape 74, il est déterminé si de nouvelles solutions doivent être recherchées en modifiant le nombre de ponts thermiques 20 et/ou les dimensions et positions des ponts thermiques 20. Si tel est le cas, le procédé se poursuit à l'étape 52 avec les nouvelles dimensions/positions de ponts thermiques 20. Si tel n'est pas le cas, le procédé se poursuit à l'étape 76.

A l'étape 76, dans le cas où plusieurs solutions ont été déterminées, il est réalisé un tri des solutions déterminées. Selon un mode de réalisation, la masse volumique moyenne et la chaleur spécifique massique de chaque solution sont déterminées à partir de la structure de l'accumulateur et des matériaux utilisés. Un tri peut être réalisé en fonction des masses volumiques moyennes et des chaleurs spécifiques massiques, seules étant retenues les solutions pour lesquelles la masse volumique moyenne et la chaleur spécifique massique sont égales aux valeurs cibles à une marge d'erreur près. Le procédé se poursuit à l'étape 78.

A l'étape 78, dans le cas où plusieurs solutions ont été déterminées à l'étape 76, il peut être réalisé un tri supplémentaire des solutions déterminées. Selon un mode de réalisation, un tri peut être réalisé en fonction d'un critère de facilité d'assemblage, par exemple pour favoriser l'obtention d'une taille standardisée d'épaisseur de plaques métalliques et/ou isolantes et une seule solution peut être retenue.

En particulier, l'utilisation d'un pont thermique ou de ponts thermiques permet de façon avantageuse de réaliser facilement un accumulateur factice dont la conductivité thermique est anisotrope.

Des modes de réalisation particuliers de la présente invention ont été décrits. Diverses variantes et modifications apparaîtront à l'homme de l'art. En outre, divers modes de réalisation avec diverses variantes ont été décrits ci-dessus. On notera que l'homme de l'art pourra combiner divers éléments de ces divers modes de réalisation et variantes sans faire preuve d'activité inventive. L'invention est définie par les revendications.

## Revendications

1. Accumulateur électrique factice (5 ; 10 ; 21 ; 23 ; 25 ; 30 ; 35 ; 40) comprenant, dans une enveloppe (12) :
- une alternance de plaques conductrices thermiquement (14) et de plaques isolantes thermiquement (16) ;
- au moins, pour l'une des plaques isolantes thermiquement interposées entre deux plaques conductrices thermiquement, un pont thermique conducteur thermiquement (20) présent dans ladite plaque isolante thermiquement et connecté mécaniquement auxdites deux plaques conductrices thermiquement ; et
- au moins un élément résistif (18) et des conducteurs électriques connectés à l'élément résistif et s'étendant à l'extérieur de l'enveloppe.

2. Accumulateur électrique factice selon la revendication 1, dans lequel les plaques conductrices thermiquement (14) ont des dimensions différentes.

3. Accumulateur électrique factice selon la revendication 1 ou 2, dans lequel au moins l'une des plaques conductrices thermiquement (14) est au moins en partie entourée par un bord isolant thermiquement (22) interposé entre deux plaques isolantes thermiquement (16).

4. Accumulateur électrique factice selon l'une quelconque des revendications 1 à 3, comprenant au moins deux ponts thermiques conducteurs thermiquement (20) connectés à des plaques conductrices thermiquement (14) différentes.

5. Accumulateur électrique factice selon l'une quelconque des revendications 1 à 4, dans lequel les plaques conductrices thermiquement (14) et les plaques isolantes thermiquement (16) sont planes.

6. Accumulateur électrique factice selon l'une quelconque des revendications 1 à 4, dans lequel les plaques conductrices thermiquement (14) et les plaques isolantes thermiquement (16) sont cylindriques.

7. Accumulateur électrique factice selon l'une quelconque des revendications 1 à 6, dans lequel les plaques conductrices thermiquement (14) sont métalliques.

8. Accumulateur électrique factice selon l'une quelconque des revendications 1 à 7, dans lequel les plaques isolantes thermiquement (16) sont en polymère.

9. Procédé de fabrication d'un accumulateur électrique factice (5 ; 10 ; 21 ; 23) comprenant les étapes suivantes :
former, dans une enveloppe (12) une alternance de plaques conductrices thermiquement (14) et de plaques isolantes thermiquement (16) ;
former, dans l'enveloppe, au moins, pour l'une des plaques isolantes thermiquement interposées entre deux plaques conductrices thermiquement, un pont thermique conducteur thermiquement (20) présent dans ladite plaque isolante thermiquement et connecté mécaniquement auxdites deux plaques conductrices thermiquement ; et
former, dans l'enveloppe, au moins un élément résistif (18) et des conducteurs électriques connectés à l'élément résistif et s'étendant à l'extérieur de l'enveloppe.

10. Procédé de fabrication selon la revendication 9, comprenant les étapes suivantes :
a) déterminer des dimensions pour les plaques conductrices thermiquement (14) ;
b) déterminer les conductivités thermiques équivalentes de l'accumulateur électrique factice (5 ; 10 ; 21 ; 23 ; 25 ; 30 ; 35 ; 40) selon des directions privilégiées ; et
c) répéter les étapes a) et b) jusqu'à ce que les conductivités thermiques équivalentes soient égales à des valeurs cibles à une marge d'erreur près.

## Patentansprüche

1. Unechter elektrischer Akkumulator (5; 10; 21; 23; 25; 30; 35; 40), der Folgendes, in einer Hülle (12), aufweist:
eine abwechselnde Folge thermisch leitender Platten (14) und thermisch isolierender Platten (16);
mindestens, und zwar für jene eine der thermisch isolierenden Platten, die zwischen zwei thermisch leitenden Platten angeordnet ist, eine thermisch leitende Thermobrücke (20), die in der genannten thermisch isolierenden Platte vorhanden ist und die mechanisch mit den genannten zwei thermisch leitenden Platten verbunden ist; und
mindestens ein Widerstandselement (18) und elektrische Leiter, die mit dem Widerstandselement verbunden sind und die sich heraus aus der Hülle erstrecken.

2. Unechter elektrischer Akkumulator nach Anspruch 1, wobei die thermisch leitenden Platten (14) unterschiedliche Dimensionierungen aufweisen.

3. Unechter elektrischer Akkumulator nach Anspruch 1 oder 2, wobei mindestens die eine der thermisch leitenden Platten (14) zumindest teilweise von einem thermisch isolierenden Rand (22) umgeben ist, der zwischen zwei thermisch isolierenden Platten (16) liegt.

4. Unechter elektrischer Akkumulator nach einem der Ansprüche 1 bis 3, der mindestens zwei thermisch leitende Thermobrücken (20) aufweist, die mit unterschiedlichen thermisch leitenden Platten (14) verbunden sind.

5. Unechter elektrischer Akkumulator nach einem der Ansprüche 1 bis 4, wobei die thermisch leitenden Platten (14) und die thermisch isolierenden Platten (16) flach sind.

6. Unechter elektrischer Akkumulator nach einem der Ansprüche 1 bis 5, wobei die thermisch leitenden Platten (14) und die thermisch isolierenden Platten (16) zylindrisch sind.

7. Unechter elektrischer Akkumulator nach einem der Ansprüche 1 bis 6, wobei die thermisch leitenden Platten (14) metallisch sind.

8. Unechter elektrischer Akkumulator nach einem der Ansprüche 1 bis 7, wobei die thermisch isolierenden Platten (16) aus Polymer sind.

9. Verfahren zur Herstellung eines unechten elektrischen Akkumulators (5; 10; 21; 23), das die folgenden Schritte aufweist:
Ausbilden, in einer Hülle (12), einer abwechselnde Folge thermisch leitender Platten (14) und thermisch isolierender Platten (16);
Ausbilden, in der Hülle, mindestens, und zwar für jene eine der thermisch isolierenden Platten, die zwischen zwei thermisch leitenden Platten angeordnet ist, einer thermisch leitenden Thermobrücke (20), die in der genannten thermisch isolierenden Platte vorhanden ist und die mechanisch mit den genannten zwei thermisch leitenden Platten verbunden ist; und
Ausbilden, in der Hülle, mindestens eines Widerstandselementes (18) und elektrischer Leiter, die mit dem Widerstandselement verbunden sind und die sich heraus aus der Hülle erstrecken.

10. Herstellungsverfahren nach Anspruch 9, das die folgenden Schritte aufweist:
(a) Bestimmen der Abmessungen für die thermisch leitenden Platten (14);
(b) Bestimmen der äquivalenten thermischen Leitfähigkeiten des unechten elektrischen Akkumulators (5; 10; 21; 23; 25; 30 ; 35; 40), und zwar in bevorzugte Richtungen; und
(c) Wiederholen der Schritte (a) und (b) bis die äquivalenten thermischen Leitfähigkeiten gleich mit bestimmten Werten sind, die ungefähr bei bzw. in einem Fehlerspielraum liegen.

## Claims

1. A dummy electric battery (5; 10; 21; 23; 25; 30; 35; 40) comprising, in a shell (12):
- an alternation of thermally-conductive plates (14) and of thermally-insulating plates (16);
- at least, for one of the thermally-insulating plates interposed between two thermally-conductive plates, a thermally-conductive thermal bridge (20) present in said thermally-insulating plate and mechanically connected to said two thermally-conductive plates; and
- at least one resistive element (18) and electric conductors connected to the resistive element and extending outside of the shell.

2. The dummy electric battery according to claim 1, wherein the thermally-conductive plates (14) have different dimensions.

3. The dummy electric battery according to claim 1 or 2, wherein at least one of the thermally-conductive plates (14) is at least partly surrounded with a thermally-insulating edge (22) interposed between two thermally-insulating plates (16) .

4. The dummy electric battery according to any of claims 1 to 3, comprising at least two thermally-conductive thermal bridges (20) connected to different thermally-conductive plates (14).

5. The dummy electric battery according to any of claims 1 to 4, wherein the thermally-conductive plates (14) and the thermally-insulating plates (16) are planar.

6. The dummy electric battery according to any of claims 1 to 5, wherein the thermally-conductive plates (14) and the thermally-insulating plates (16) are cylindrical.

7. The dummy electric battery according to any of claims 1 to 6, wherein the thermally-conductive plates (14) are metallic.

8. The dummy electric battery according to any of claims 1 to 7, wherein the thermally-insulating plates (16) are made of polymer.

9. A method of manufacturing a dummy electric battery (5; 10; 21; 23) comprising the steps of:
forming, in a shell (12), an alternation of thermally-conductive plates (14) and of thermally-insulating plates (16);
forming, in the shell, at least, for one of the thermally-insulating plates interposed between two thermally-conductive plates, a thermally-conductive thermal bridge (20) present in said thermally-insulating plate and mechanically connected to said two thermally-conductive plates; and
forming, in the shell, at least one resistive element (18) and electric conductors connected to the resistive element and extending outside of the shell.

10. The manufacturing method according to claim 9, comprising the steps of:
a) determining dimensions for the thermally-conductive plates (14);
b) determining the equivalent thermal conductivities of the dummy electric battery (5; 10; 21; 23; 25; 30; 35; 40) in preferred directions; and
c) repeating steps a) and b) until the equivalent thermal conductivities are equal to target values plus or minus an error margin.
